# EUROPEAN PATENT APPLICATION

(11) **EP 4 678 523 A1**
(43) Date of publication of application: **14.01.2026**
(21) Application number: 24188274.5
(22) Date of filing: 12.07.2024
(51) Int. Cl.: B62J 6/045, B62J 6/055, B62J 6/04, B62K 11/10, B62M 7/12

(54) **SCOOTER TYPE VEHICLE**

(71) Applicant: Yamaha Hatsudoki Kabushiki Kaisha, Iwata-shi, Shizuoka 438-8501 (JP)
(72) Inventor: HSIEH, CHIN-YU, HUKOU TOWNSHIP (TW); HUANG, SHIH-MING, HUKOU TOWNSHIP (TW); CHEN, YEN-JONG, HUKOU TOWNSHIP (TW)
(74) Representative: Studio Torta S.p.A.

(57) **Abstract**

The present invention provides a sporty scooter-type vehicle (1) which prevents a rear portion of a vehicle (1) from increase in size while ensuring an identification of a taillight (TL) and left and right winkers (WL, WR). The scooter-type vehicle (1) of the present invention includes a rear cover (40) including a winker cover (50) and a left side cover (41L) and a right side cover (41R) which are respectively disposed on a left side of the vehicle (1) and a right side of the vehicle (1) in a rear view, a taillight (TL), a left winker (WL) disposed on the left side in a rear view, and a right winker (WR) disposed on the right side in a rear view. The left winker (WL) includes a left winker translucent cover (WLC) which has a left winker light-emitting surface (WLS) and the right winker (WL) includes a right winker translucent cover (WRC) which has a right winker light-emitting surface (WRS). At least a portion of an upper edge of each of the left side cover (41L) and the right side cover (41R) extends rearward. At least a portion of a lower edge of each of the left side cover (41L) and the right side cover (41R) extends rearward and upward. A rear end , at which the upper edge and the lower edge of each of the left side cover (41L) and the right side cover (41R) intersect, overlaps with the taillight (TL). The taillight (TL) includes a translucent cover (TLC). The translucent cover (TLC) includes an upper light-emitting surface which extends from a rear edge of the translucent cover (TLC) to an upper side and a front side, and a lower light-emitting surface which extends from the rear edge of the translucent cover (TLC) to a lower side and the front side. A rear end of the translucent cover (TLC) is disposed on the rear side of the rear end of each of the left side cover (41L) and the right side cover (41R). The left winker and the right winker (WL, WR) are disposed on the lower side of the taillight (TL) in the rear view and an entire portion of the left winker light-emitting surface (WLS) and the right winker light-emitting surface (WRS) is disposed between a left end and a right end of the translucent cover (TLC) of the taillight in the rear view.

## Description

### Technical Field

The present invention relates to a rear portion of a scooter-type vehicle, in particular to a rear light structure of the rear portion of the scooter type vehicle.

### Background Information

In general, a taillight, a stop light, and left and right winkers are disposed at a rear portion of a scooter-type vehicle to emit light which is required when the vehicle is traveling. In the conventional vehicle, the stop light and the taillight are disposed in an up-down direction. For example, in an example of a patent document 1, the stop light, the taillight, and the left and right winkers are disposed on a taillight unit housing and are covered by a single translucent cover, which is a so-called a rear combination light. As a result, the stop light is built into the taillight unit and is configured as a single taillight unit. In addition, the left and right winkers are surrounded by the vehicle's side covers so that the left and right winkers are respectively positioned on the left and right sides of the taillight unit. That is, the taillight and the winker are separated by a partition of the cover.

### Citation List

[Patent Document 1] WO 2005/063555 Al

### SUMMARY OF INVENTION

### Technical Problem

The conventional scooter-type vehicle, which is disclosed in the patent document 1, includes a seat and side covers which defines a space below the seat. The side cover gives the impression of a sporty scooter-type vehicle to the scooter-type vehicle, since the side cover is formed such that a lower edge extends rearward and upward in a side view.

In addition, the left and right winkers are provided on the side covers of the vehicle so as to be respectively disposed on the left and right sides of the taillight. The left and right winkers need to be mounted on the side covers so as to be away from the taillight in order to improve identification of the taillight when the left and right winkers are turned on.

However, the rear portion of the side covers, in which the left and right winkers are disposed, expands on both sides in a width direction of the vehicle in order to accommodate parts such as the light housing and light sources of the left and right winkers. In addition, the left and right winkers need to be disposed sidewardly and forwaydly away from the taillight unit, being seperated by the side covers, in order to ensure the identification. By the configuration, the conventional scooter-type vehicle of the patent document 1 has ensured the identification. However, it is impossible to miniaturize the rear portion of the scooter-type vehicle, since the side covers become wider. As a result, there is an issue which the rear portion of the scooter-type vehicle increases in size.

The present invention is made in consideration of the above issues and an object of the present invention is to provide a sporty scooter-type vehicle which can prevent a rear portion of a vehicle from increase in size while ensuring an identification of a taillight unit and left and right winkers.

### Solution to Problem

Inventor of the present application has conducted research about a request which is to ensure the identification of the taillight and the left and right winkers from multiple directions such as from a rear side, a left rear side, a right rear side, and sides, while preventing the rear portion of the vehicle from increase in size.

Specifically, first, the inventor has attempted to move the left and right winkers which are mounted on the side covers on the left and right sides of the taillight, so that the left and right winkers are disposed lower than the taillight and have attempted to mount the left and right winkers on a supporting member such as a body frame or a license bracket. As a result, a width of the rear portion of the side cover can be reduced in a left-right direction, since a space for disposing the left and right winkers is eliminated.

Moreover, the inventor of the present application further has considered that configure such that the entire portion of the left winker light-emitting surface and the right winker light-emitting surface is disposed between a left end and a right end of a translucent cover of the taillight in a rear view. As a result, it is possible to miniaturize the side covers and to achieve a sporty scooter-type vehicle.

However, the inventor of the present invention has discovered a new problem. If the conventional scooter-type vehicle of the patent document 1 was modified as described above, the left and right winkers, which are provided on the supporting member such as the body frame or the license bracket below the taillight, is not covered by the side cover. There is no substantial partition between the left and right winkers and the taillight. In addition, the entire portion of the left winker light-emitting surface and the right winker light-emitting surface is disposed between the left end and the right end of the translucent cover of the taillight in the rear view. In this case, when the winkers are activated while the taillight is turned on, a halo is created around the winkers by its strong light source and may interfere with a light of the taillight which is turned on. Therefore, the above problem, which could arise in the miniaturized scooter-type vehicles, must be solved.

As a result of a further diligently research, the inventor of the present application has arrived at a configuration which can provide the sporty scooter-type vehicle that ensures the identification of between the taillight and the left and right winkers and prevents the rear portion of the vehicle from increasing in size.

The scooter-type vehicle of the present invention comprises a seat on which a rider sits, a seat rail supporting the seat and extending toward a rear side of the vehicle, a rear cover including a left side cover, a right side cover and a winker cover, the left side cover and the right side cover being disposed lower the seat and outside the seat rail on a left side and a right side of the vehicle respectively, a taillight disposed between the left side cover and the right side cover in a rear view, a left winker disposed on the left side with respect to a center of the vehicle in a left-right direction, the left winker including a left winker translucent cover and at least a portion of the left winker being covered by the winker cover in the rear view, and a right winker disposed on the right side with respect to the center of the vehicle in the left-right direction, the right winker including a right winker translucent cover and at least a portion of the right winker being covered by the winker cover. The winker cover is disposed under the taillight in the rear view. The left winker translucent cover includes a left winker light-emitting surface which is not covered by the winker cover. The right winker translucent cover includes a right winker light-emitting surface which is not covered by the winker cover. At least a portion of upper edges of each of the left side cover and the right side cover extends rearward in the side view. At least a portion of lower edges of each of the left side cover and the right side cover extends rearward and upward in the side view and rear ends, at which the upper edges and the lower edge of each of the left side cover and the right side cover intersect, overlaps with the taillight in the side view. The taillight includes a translucent cover. The translucent cover includes an upper light-emitting surface which is not covered by the rear cover and extends upward and forward from a rear edge of the translucent cover, and a lower light-emitting surface which is not covered by the rear cover and extends upward and forward from the rear edge of the translucent cover. A rear end of the translucent cover is disposed further rearwardthan the rear ends of each of the left side cover and the right side cover. The left winker and the right winker are disposedunder the taillight in the rear view. An entire portion of the left winker light-emitting surface and the right winker light-emitting surface is disposed between a left end and a right end of the translucent cover of the taillight in the rear view.

According to the present invention, unlike conventional scooter-type vehicles in which the left and right winkers are disposed on the side covers of the vehicle so as to be disposed on the left and right sides of the taillight, no space is used in the side covers for disposing the left winker and the right winker since the left winker and right winker are disposed under the taillight in the rear view. As a result, this configuration makes it possible to further reduce the left-right width of the side covers and makes them more compact. At least a portion of the upper edge of the side covers extends rearward in the side view, and at least a portion of the lower edge extends rearward and upward in the side view. Therefore, the side covers include a shape which gradually becomes thinner toward the rear portion of the vehicle and becomes lighter and smaller toward the rear portion of the vehicle. As a result, the scooter-type vehicle can be reduced in weight and size.

For the reasons described above, the present invention provides a sportier vehicle than the conventional scooter-type vehicle. In addition, since the taillight and the left and right winkers are separate, the taillight and the left and right winkers can each be made compact. Therefore, it is easy to utilize efficiently the limited space of the compact vehicle.

In addition, the taillight of the present invention is formed to include then upper light-emitting surface extending upward and forward from the rear end of the translucent cover of the taillight, and the lower light-emitting surface extending downward and forward from the rear end of the translucent cover of the taillight. Therefore, the taillight can contribute to the creation of a sporty vehicle, since the taillight includes a shape which becomes thinner toward the rear in the side view. In addition, the visual recognition of the taillight can be ensured, since the taillight includes the upper light-emitting surface extending upward and forward from the rear end of the translucent cover. Therefore, it is easy for the driver of the following vehicle to confirm the lighting state of the taillight.

In addition, the rear ends, at which the upper edges and the lower edge of the side cover intersect, overlaps with the taillight in the side view and the rear end of the translucent cover of the taillight is disposed in the rear side of the rear ends of the side cover. Therefore, since it is possible to confirm the light emission state of the taillight even from the side, it is possible to ensure the visual recognition of the taillight from the side while making the taillight compact.

On the other hand, the winker cover disposed on the lower side of the side cover covers the periphery of the left winker and the right winker so as to expose the left winker light-emitting surface and the right winker light-emitting surface in the rear view. As a result, since the winker cover exists as the substantial partition between the left and right winkers and the taillight, the halo is less likely to create around the left and right winker when they are emitting. Therefore, even if the compact side cover is pursued by disposing the left winker and the right winker so as to be close to the taillight, the light from the taillight can be more clearly distinguished from the lights from the left winker and the right winker, and the identification of both lights is ensured, since interference with the light of the turned-on taillight is greatly reduced. In addition, since the left and right winkers and the taillight are separate, the taillight itself can be made compact and the sporty scooter-type vehicle prevents the rear portion of the vehicle from increasing in size is provided.

As a result, the beneficial effect of the present invention is to provide the sporty scooter-type vehicle which prevents the rear portion of the vehicle from increasing in size while ensuring the visual recognition of the taillight and the left and right winkers and the identification of the left and right winkers.

In one preferred embodiment of the present invention, the upper edge of the winker cover extends rearward along the lower edge of the side cover in the side view and the lower edge of the winker cover extends rearward and upward from the front side in the side view.

According to one preferred embodiment of the present invention described above, the upper edge of the winker cover extends rearward along the lower edge of the side cover, and the lower edge of the winker cover extends rearward and upward from the front. Therefore, the winker cover can be provided adjacent to the side covers and the thickness of the rear portion of the vehicle in the up-down direction can be reduced, and the rear portion of the vehicle can be formed so as to gradually become thinner toward the rear in accordance with a shape of the side covers. As a result, the vehicle can be reduced in weight and size and the scooter-type vehicle becomes a sportier vehicle than the conventional scooter-type vehicles.

In one preferred embodiment of the present invention, the entire portion of the left winker light-emitting surface and the right winker light-emitting surface is disposed between the left end and the right end of the light-emitting surface of the taillight in rear view.

According to one preferred embodiment of the present invention described above, since the entire portion of the left winker light-emitting surface and the right winker light-emitting surface is disposed between the left end and the right end of the light-emitting surface of the taillight in rear view, the left-right width of the winker cover, which covers the periphery of the left winker and the right winker, can be made smaller.

In one preferred embodiment of the present invention, the left winker light-emitting surface and the right winker light-emitting surface are formed so as to have portions exposed from the winker cover in the side view.

According to one preferred embodiment of the present invention, the left winker light-emitting surface and the right winker light-emitting surface are formed so as to have portions which exposed from the winker cover in the side view. Therefore, even if the winker cover covers the periphery of the left winker and the right winker, the visual recognition of the left winker and the right winker from the sides can be ensured since it is possible to confirm the left winker or the right winker from the sides when the left winker or the right winker blinks.

In one preferred embodiment of the present invention, the left winker light-emitting surface and the right winker light-emitting surface are not exposed from the winker cover in the side view.

According to one preferred embodiment of the present invention described above, the rear portion of the scooter-type vehicle is further reduced in size and the scooter-type vehicle becomes a sportier vehicle, since the left winker and the right winker can be made smaller in the side view.

In one preferred embodiment of the present invention, the upper light-emitting surface of the taillight is formed in a substantially U-shape in a plan view

According to one preferred embodiment of the present invention described above, the left-right width of the taillight is restrained while lengthening both sides and it is possible to increase the size of the light-emitting surface, since the upper light-emitting surface of the taillight is formed in the U-shape in the planar view. Thereby, it is possible to ensure area of the light-emitting surface. As a result, the rear portion of the scooter-type vehicle can be made even smaller while ensuring the visual recognition of the taillight.

In one preferred embodiment of the present invention, a left-right width of the upper light-emitting surface of the taillight reduces toward the rear side in the plan view.

According to one preferred embodiment of the present invention described above, the left-right width of the scooter-type vehicle can become smaller toward the rear, since the left-right width of the upper light-emitting surface of the taillight reduces toward the rear side in the plan view. As a result, the rear portion of the scooter-type vehicle can be made even smaller while ensuring the visual recognition of the taillight.

In one preferred embodiment of the present invention, the rear end of the left winker light-emitting surface and the rear end of the right winker light-emitting surface are disposed further forward than the rear end of the light-emitting surface of the taillight in the side view.

According to one preferred embodiment of the present invention described above, like the trend of the lower edge of the winker cover, the rear end of the light-emitting surface of the taillight is positioned further upward and rearward than the rear end of the left winker light-emitting surface and the rear end of the right winker light-emitting surface. As a result, the rear portion of the vehicle can become thinner toward the rear. Therefore, the vehicle is reduced in size and the scooter-type vehicle becomes a sportier vehicle.

In one preferred embodiment of the present invention, the rear end of the left winker light-emitting surface and the rear end of the right winker light-emitting surface are disposed further forward thanthe front end of the lower light-emitting surface of the taillight in the side view.

According to one preferred embodiment of the present invention described above, similarly, like the trend of the lower edge of the winker cover, the rear end of the light-emitting surface of the taillight is positioned further upward and rearward than the rear end of the left winker light-emitting surface and the rear end of the right winker light-emitting surface in the side view. As a result, the rear portion of the vehicle can become thinner toward the rear. As a result, the vehicle can be reduced in size and the scooter-type vehicle becomes a sportier vehicle than the conventional scooter-type vehicles. In addition, it is possible to more clearly distinguish between the light from the taillight and the light from the left and right winkers in the side view and the identification of both lights can be ensured, since the left winker light-emitting surface and the right winker light-emitting surface do not overlap with the lower light-emitting surface of the taillight in the front-rear direction of the vehicle. Therefore it is possible to ensure the identification of the taillight and the left and right winkers from the sides while reducing the size of the vehicle.

In one preferred embodiment of the present invention, the left winker light-emitting surface extends downward and forward from a rear end thereof in the side view. The right winker light-emitting surface extends downward and forward from the rear end thereof in the side view.

According to one preferred embodiment of the present invention described above, the left winker light-emitting surface and the right winker light-emitting surface become thinner toward the rear in the side view as well as the taillight and contributes to the creation of the sporty vehicle.

In one preferred embodiment of the present invention, the winker cover is disposed between the left side cover and the right side cover in the rear view.

According to one preferred embodiment of the present invention described above, the left-right width of the winker cover which covers the periphery of the left winker and the right winker can be further reduced, since the winker cover is disposed between the left side cover and the right side cover in the rear view. Therefore, the rear portion of the scooter-type vehicle is further reduced in size and the scooter-type vehicle becomes a sportier vehicle.

### BRIEF DESCRIPTION OF DRAWINGS

FIG. 1 is a left side view of a scooter-type vehicle 1.
FIG. 2 is a right side view of the scooter-type vehicle 1.
FIG. 3 is a plan view of the scooter-type vehicle 1 in a state where a grip is removed.
FIG. 4 is a partially enlarged rear view of the scooter-type vehicle 1.
FIG. 5 is a partially enlarged plan view of the scooter-type vehicle 1 in the state where the grip is removed.
FIG. 6 is an exploded perspective view of a taillight TL.
FIG. 7 is an exploded perspective view of a left winker WL and a right winker WR.
FIG. 8 is a partially enlarged left side view of the scooter-type vehicle 1.
FIG. 9 is a partially enlarged right side view of the scooter-type vehicle 1.
FIG. 10 is a partially enlarged perspective rear view of the scooter-type vehicle 1.

### DETAILED DESCRIPTION OF EMBODIMENTS

A scooter-type vehicle according to the present invention will be described in detail with reference to an embodiment shown in the accompanying drawings.

Unless otherwise specified, front, rear, left, and right respectively means a front direction, a rear direction, a left direction, and a right direction as seen from a rider sitting on the scooter-type vehicle 1 in the following description. Forward, rearward, leftward, and rightward respectively means toward the front, toward the rear, toward the left, and toward the right as seen from a rider sitting on the scooter-type vehicle 1. In a state where the vehicle is stationary and upstanding, a front-rear direction is the same as a length direction of the vehicle, a left-right direction is the same as a width direction of the vehicle, and a up-down direction is the same as a height direction of the vehicle. Unless otherwise specified, the front-rear direction corresponds to a front-rear direction of the vehicle, the left-right direction corresponds to a left-right direction of the vehicle, and the up-down direction corresponds to a up-down direction of the vehicle. "Front view" is a drawing in a state where the scooter-type vehicle 1 is viewed from a front side thereof. "Side view" is a drawing in a state where the scooter-type vehicle 1 is viewed from sides thereof, i.e., from a left side or a right side, "plan view" corresponds is a drawing in a state where the scooter-type vehicle 1 is viewed from an upper side thereof, and "rear view" corresponds to a drawing in a state where the scooter-type vehicle 1 is viewed from a rear side thereof. In addition, directions of arrows F and B in the drawings respectively indicate the front direction and the rear direction, directions of arrows U and D respectively indicate the upper side and a lower side, and directions of arrows L and R respectively indicate the left side and the right side.

In addition, unless otherwise specified, a horizontal direction is a direction horizontal to the ground, and a vertical direction is a direction vertical to the ground in the following description.

### <Entire vehicle>

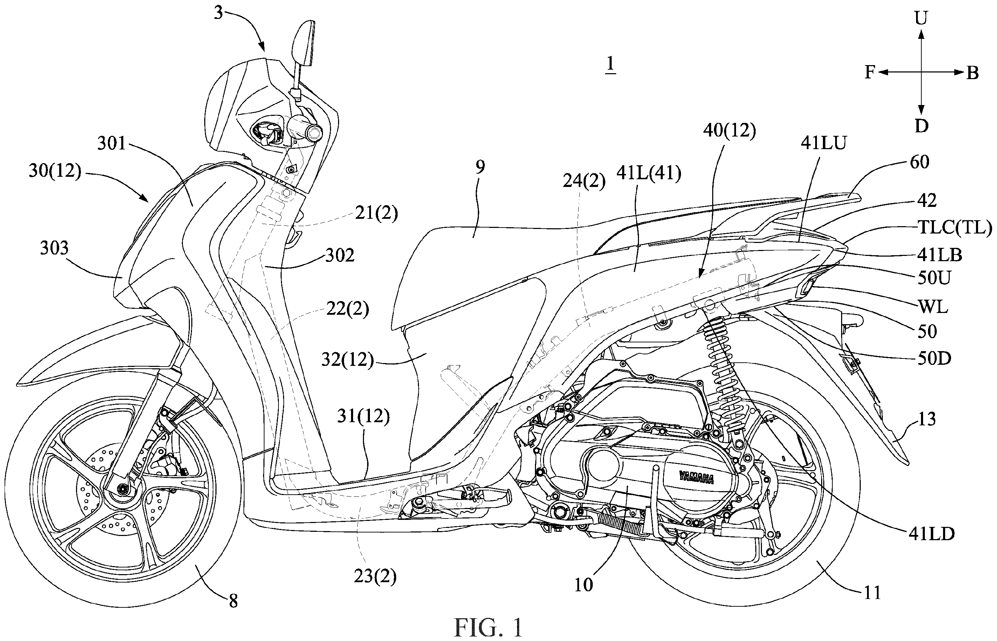

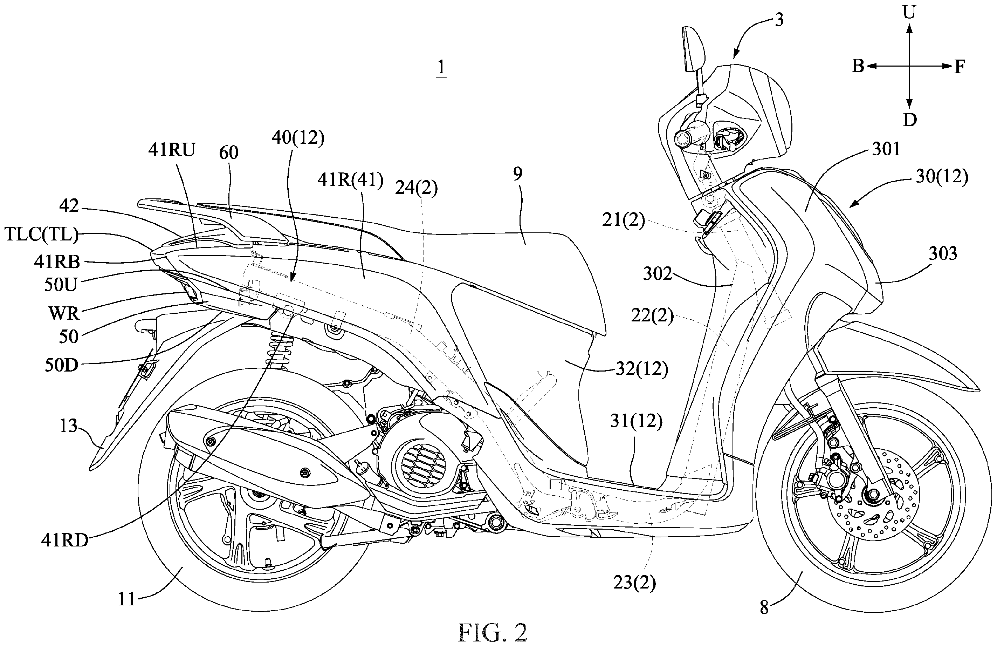

FIG. 1 is a left side view of the scooter-type vehicle 1 of the present embodiment. FIG. 2 is a right side view of the scooter-type vehicle 1 of the present embodiment.

The scooter-type vehicle 1 of this embodiment is a so-called "underborn" scooter-type vehicle. As shown in FIG. 1, a front wheel 8 of the scooter-type vehicle 1 is steered by a steering mechanism 3. The scooter-type vehicle 1 includes a body frame 2. The body frame 2 includes a head pipe 21 into which a steering shaft of a steering mechanism 3 is inserted to rotatably support the steering mechanism 3, a down frame 22 extending downward from the head pipe 21, a lower frame 23 extending rearward from the down frame 22, and a seat rail 24 extending rearward and upward from the lower frame 23. A unit swing-type power unit 10 is supported in a center of the body frame 2 so as to be able to swing up and down about a pivot portion. The power unit 10 is not limited to the unit swing-type and may be fixed to the body frame 2, for example. A seat 9 is attached above the power unit 10 so as to be openable and closable with respect to a storage box (not shown) around a hinge pin (not shown) which is provided at a front end or a rear end of the seat 9. The seat rails 24 support the seat 9 and are provided to extend toward the rear side of the vehicle. A rear end of the power unit 10 is connected to rear wheels 11 and transmits an output of an engine to the rear wheels 11. In addition, a body cover 12 of the scooter-type vehicle 1 is disposed outside the body frame 2 and a storage box (not shown), and forms a portion of an external appearance of the vehicle. Furthermore, the license bracket 13 is provided below the body cover 12. In addition, a grip 60 is provided at a rear portion of the vehicle behind the seat 9 and above a taillight TL. The rider operates the steering mechanism 3 to drive the scooter-type vehicle 1 in a state where the rider sits on a seating portion in front of the seat 9 and places his/her feet on an upper surface of a footrest portion 31. The scooter-type vehicle 1 of this embodiment is an example of a two-seater vehicle, and a tandem rider can ride in a seating position on a tandem portion of the seat 9.

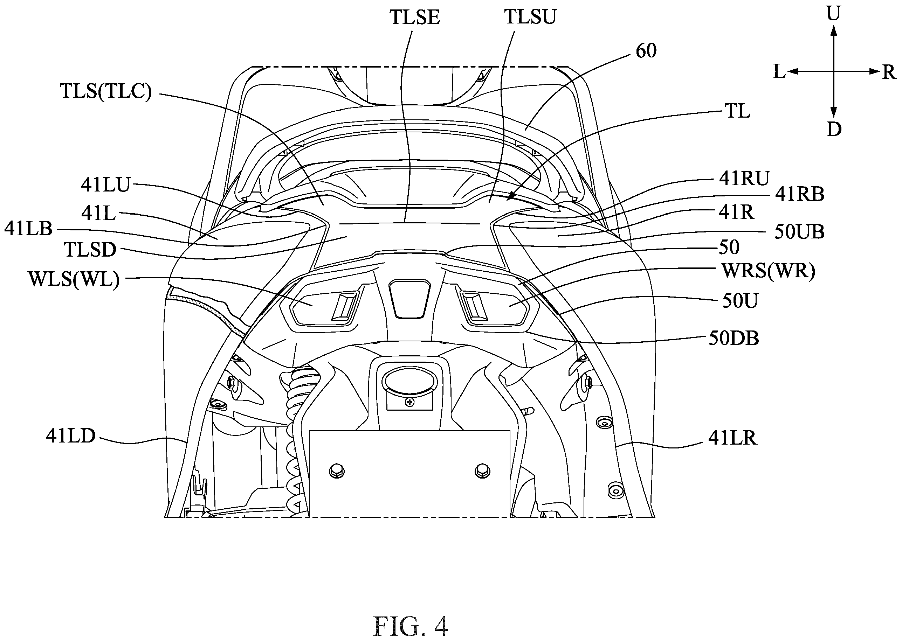

As shown in FIG. 4, the taillight TL which shows the existence of the vehicle and a left winker WL and a right winker WR which show a direction in which the vehicle is turning are disposed at the rear portion of the scooter-type vehicle 1.

### < body cover>

The body cover 12 include a front cover 30, the footrest portion 31, a center cover 32, a rear cover 40, etc. As shown in FIG. 1, a front cover 30 is provided at a front portion of the vehicle. The footrest 31, on which the rider places his/her feet, is provided between the front cover 30 and the rear cover 40. The center cover 32 is disposed between a rear end of the footrest portion 31 and a front portion of the seat 9.

The front cover 30 includes side covers 301 disposed on the sides of a front portion of the vehicle, a rear side cover 302 disposed behind the front portion of the vehicle, and a front side cover 303 disposed in front of the head pipe 21.

In this embodiment, the footrest portion 31 disposed between the front cover 30 and the rear cover 40 is a structure including a flat upper surface, but the rear cover 40 is not limited to this structure and may be a structure including, for example, a tunnel portion in a center of the footrest portion 31.

### <Rear cover>

The rear cover 40 is disposed lower than the seat 9 and outside the seat rails 24 in the rear view and the rear cover 40 defines a space below the seat 9. In this embodiment, as shown in FIGS. 1 and 2, the rear cover 40 mainly includes side covers 41, a winker cover 50, and an upper cover 42 which covers at least a portion of the taillight TL from the upper side and is positioned between the seat 9 and the taillight TL. In the present invention, the seat 9 may be adjacent to the taillight TL and the upper cover 42 may not exist between the seat 9 and the taillight TL.

### <Side cover>

The side covers 41 are disposed lower than the seat 9 and are disposed at least below the seat 9 on the left and right sides of the vehicle. The side covers 41 cover at least a portion of the seat rail 24, the body frame 2, and the storage box below the seat 9, and forms a portion of the external appearance of the vehicle. More specifically, as shown in FIGS. 1 and 2, the side covers 41 include a left side cover 41L and a right side cover 41R which are respectively disposed on the left and right sides of the vehicle. The left side cover 41L and the right side cover 41R are preferably formed symmetrically, but may be modified so as not to be symmetrical in order to achieve a new external design for the vehicle or to dispose parts.

Furthermore, in the present invention, even if the left side cover 41L, the right side cover 41R and the upper cover 42 are formed integrally, a portion covering at least a portion of the taillight TL from the upper side and disposed between the seat 9 and the taillight TL is regarded as the upper cover 42, a portion disposed on the left side of the vehicle is regarded as the left side cover 41L, and a portion disposed on the right side of the vehicle is regarded as the right side cover 41R.

In the following description of the invention, when the side covers 41 are mentioned, they refer to both of the left side cover 41L and the right side cover 41R. In the description of the present invention, when upper edges of the side covers 41 are mentioned, they refer to both of an upper edge 41LU of the left side cover 41L and an upper edge 41RU of the right side cover 41R. In the description of the present invention, when lower edges of the side covers 41 are mentioned, they refers to both of a lower edge 41LD of the left side cover 41L and a lower edge 41RD of the right side cover 41R. In addition, in the description of the present invention, when rear ends of the side covers 41 are mentioned, they refers to both of a rear end 41LB of the left side cover 41L and a rear end 41RB of the right side cover 41R.

Further, the left side cover 41L and the right side cover 41R of the side covers 41 are disposed lower than the seat 9 and are disposed outside the seat rails 24 on the left and right sides of the vehicle, respectively. The upper edges 41LU, 41RU of the side covers 41 extend at least partially rearward, and the lower edges 41LD, 41RD of the side covers 41 extends at least partially rearward and upward in the side view. Specifically, as shown in FIG. 1, at least a portion of the upper edge 41LU of the left side cover 41L extends rearward, and at least a portion of the lower edge 41LD extends rearward and upward so as to approach the upper edge 41LU in the left side view. Similarly, as shown in FIG. 2, at least a portion of the upper edge 41RU of the right side cover 41R extends rearward, and at least a portion of the lower edge 41RD extends rearward and upward so as to approach the upper edge 41RU in the right side view. Therefore, the side covers 41 include a shape which gradually becomes thinner toward the rear portion of the vehicle and becomes lighter and smaller toward the rear portion of the vehicle in the side view. As a result, the scooter-type vehicle 1 can be reduced in weight and size and a sportier vehicle is achieved.

Furthermore, "at least a portion of the upper edges of the side covers 41 extends rearward" includes any of "at least a portion of the upper edges of the side covers 41 extends rearward and upward", "at least a portion of the upper edges of the side covers 41 extends rearward and downward, or "at least a portion of the upper edges of the side covers 41 extends horizontally toward the rear". In this embodiment, at least a portion of the upper edges 41LU, 41RU of the side covers 41 is formed so as to extend rearward and upward.

In addition, the rear ends 41LB, 41RB of the side covers 41, where the upper edges 41LU, 41RU and the lower edges 41LD, 41RD of the side covers 41 intersect, overlap with the taillight TL in the side view. Specifically, the rear end 41LB of the left side cover 41L, where the upper edge 41LU and the lower edge 41LD of the left side cover 41L intersect, overlaps with the taillight TL in the left side view. In other words, the rear end 41LB of the left side cover 41L, where the upper edge 41LU and the lower edge 41LD of the left side cover 41L intersect, is adjacent the taillight TL on the left side of the taillight TL. Similarly, the rear end 41RB of the right side cover 41R, where the upper edge 41RU and the lower edge 41RD of the right side cover 41R intersect, overlaps with the taillight TL in the right side view. In other words, the rear end 41RB of the right side cover 41R, where the upper edge 41RU and the lower edge 41RD of the right side cover 41R intersect, is adjacent the taillight TL on the right side of the taillight TL. Therefore, since it is possible to confirm a light emission state of the taillight TL even from the side, it is possible to ensure a visual recognition of the taillight TL from the side while making the taillight TL compact.

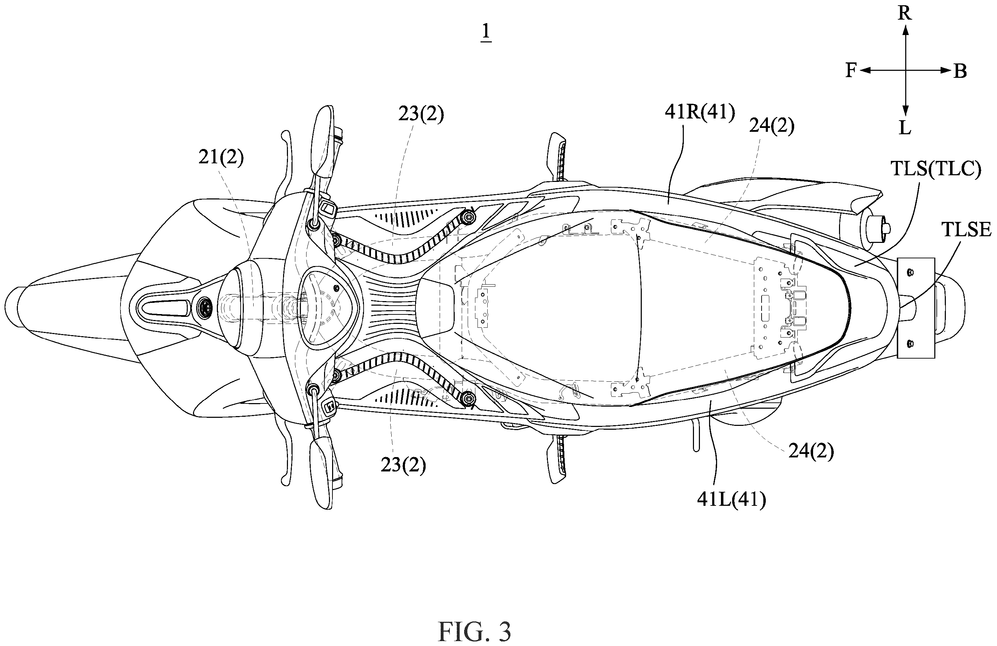

As shown in FIG. 4, at least a portion of the left side cover 41L and the right side cover 41R extends so as to approach a center of the vehicle in the left-right direction toward the rear in the rear view. In other words, at least a portion of the upper edge 41LU of the left side cover 41L extends so as to approach the center of the vehicle in the left-right direction toward the rear and at least a portion of the lower edge 41LD extends so as to approach the center of the vehicle in the left-right direction toward the rear. Similarly, at least a portion of the upper edge 41RU of the right side cover 41R extends so as to approach the center of the vehicle in the left-right direction toward the rear and at least a portion of the lower edge 41RD extends so as to approach the center of the vehicle in the left-right direction toward the rear. As shown in FIG. 3, in the plan view in a state where the grip 60 is removed, the sporty scooter-type vehicle 1, which prevents the rear portion of the vehicle from increasing in size, is provided, since a width of the rear portion of the scooter-type vehicle 1 in the left-right direction is reduced by forming the side cover 41 in this manner. In addition, the tandem rider can ride in a relaxed position since the tandem rider does not need to spread his legs wide. In addition, in this embodiment, the rear end 41LB of the upper edge 41LU and the lower edge 41LD of the left side cover 41L is closest to the center of the vehicle in the left-right direction and the rear end 41RB of the upper edge 41RU and the lower edge 41RD of the right side cover 41R is closest to the center of the vehicle in the left-right direction.

In this embodiment, as shown in the side views of FIGS. 1 and 2 and the rear view of FIG. 4, a surface of each of the left side cover 41L and the right side cover 41R is formed so that a concave portion, which is recessed between the upper edges 41LU, 41RU and the lower edges 41LD, 41RD, exists. As will be described later, in the present invention, the winker cover 50 is disposed under the taillight TL in the rear view. In other words, an entire portion of the left winker WL and the right winker WR is disposed under the taillight TL in the rear view. Therefore, the concave portion, which is recessed between the upper edges 41LU, 41RU and the lower edges 41LD, 41RD, can be formed on the surface of each of the left side cover 41L and the right side cover 41R. As shown in FIG. 3, this configuration makes it possible to reduce the left-right width of the side covers 41 without swelling the surfaces of the side covers 41 and thus the sporty scooter-type vehicle 1, which prevents the left-right width of the rear portion of the vehicle from increasing in size, can be provided. In addition, the tandem rider can ride in the relaxed position since the tandem rider does not need to spread his legs wide.

### <Winker cover>

As shown in the side views of FIGS. 1 and 2 and in the rear view of FIG. 4, the winker cover 50 is disposed lower than the side covers 41 at the rear portion of the side covers 41. The winker cover 50 is a member which covers the left winker WL and the right winker WR. More specifically, in the rear view of FIG. 4, the winker cover 50 covers a periphery of the left winker WL and the right winker WR so as to expose only a left winker light-emitting surface WLS and a right winker light-emitting surface WRS which will be described later.

More preferably, as shown in the side view of FIGS 1 and 2, an upper edge 50U of the winker cover 50 extends along the lower edge of the side covers 41 in the side view. A lower edge 50D of the winker cover 50 extends rearward and upward from the front side. Specifically, as shown in FIG. 1, the upper edge 50U, which is disposed on the left side of the winker cover 50, extends along the lower edge 41LD of the left side cover 41L, and the lower edge 50D, which is disposed on the left side of the winker cover 50, extends rearward and upward from the front side in the left side view. Similarly, as shown in FIG. 2, the upper edge 50U, which is disposed on the right side of the winker cover 50, extends along the lower edge 41RD of the right side cover 41R, and the lower edge 50D, which is disposed on the right side of the winker cover 50, extends rearward and upward from the front side in the right side view. Therefore, the winker cover 50 can be provided adjacent to the side covers 41 and the thickness of the rear portion of the vehicle in the up-down direction can be reduced, and the rear portion of the vehicle can be formed so as to gradually become thinner toward the rear in accordance with a shape of the side covers 41. As a result, the vehicle can be reduced in weight and size and the scooter-type vehicle 1 becomes a sportier vehicle.

In this embodiment, the winker cover 50 is disposed so that a gap does not exist between the upper edge 50U of the winker cover 50 and the lower edges 41LD, 41RD of the side covers 41 in the side view. However, as long as the upper edge 50U of the winker cover 50 extends along the lower edge 41LD, 41RD of the side covers 41, there may be a gap between the upper edge 50U of the winker cover 50 and the lower edge 41LD, 41RD of the side covers 41.

In addition, in this embodiment, the winker cover 50 is formed so that the periphery of the left winker WL and the right winker WR is covered by the single winker cover 50, but the winker cover 50 is not limited to this configuration and two or more separate winker covers 50, which respectively cover a part of the periphery of the left winker WL and the right winker WR, can be used.

In addition, as shown in FIG. 4, at least a portion of the winker cover 50 can extend so as to approach the center of the vehicle in the left-right direction toward the rear in the rear view. In other words, at least a portion of the upper edge 50U of each of the left and right sides of the winker cover 50 extends so as to approach the center of the vehicle in the left-right direction toward the rear, and at least a portion of the lower edge 50D of each of the left and right sides extends so as to approach the center of the vehicle in the left-right direction toward the rear. The sporty scooter-type vehicle 1, which reduces the width in the left-right direction of the rear portion of the scooter-type vehicle 1 and prevents the rear portion of the vehicle from increasing in size, is provided as well as the side covers 41 by forming the winker cover 50 in this manner. In addition, in this embodiment, a rear end 50UB of the upper edge 50U of each of the left and right sides of the winker cover 50 is closest to the center of the vehicle in the left-right direction, and a rear end 50DB of the lower edge 50D of each of the left and right sides is closest to the center of the vehicle in the left-right direction.

In addition, as shown in FIG. 4, more preferably, the winker cover 50 is disposed between the left side cover 41L and the right side cover 41R in the rear view. The rear portion of the scooter-type vehicle 1 is further reduced in size and the scooter-type vehicle 1 becomes a sportier vehicle, since the width in the left-right direction of the winker cover 50, which covers the periphery of the left winker WL and the right winker WR, can be made smaller by this configuration.

### <Taillight>

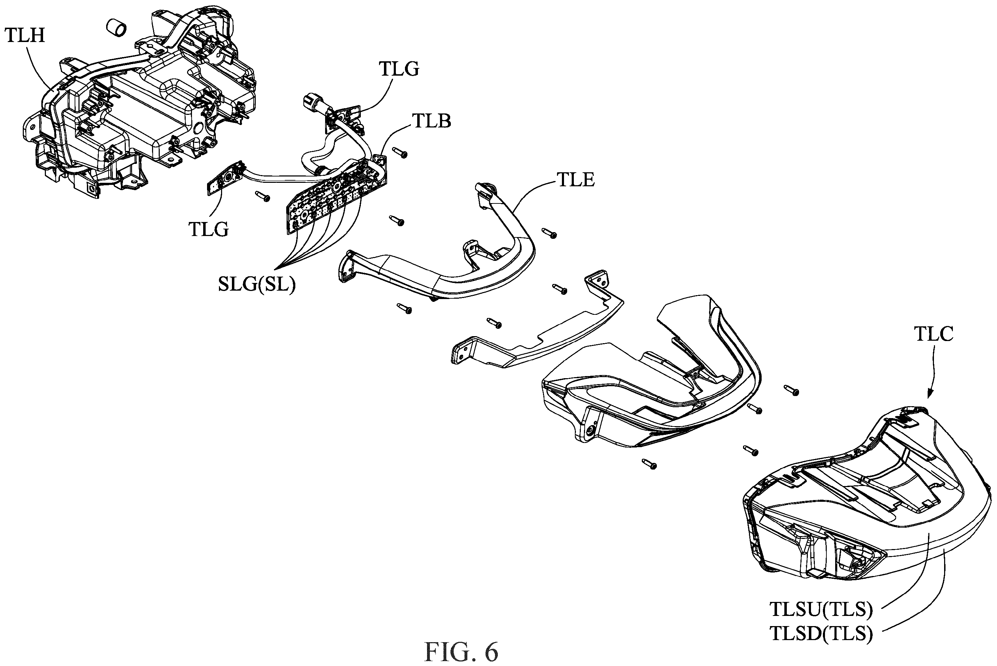

As shown in FIG. 6, the taillight TL includes a taillight source TLG, a housing TLH to which the taillight source TLG is mounted, a diffusion member TLE which diffuses the light of the taillight source TLG, and a translucent cover TLC which transmits light of the taillight source TLG. The taillight source TLG is disposed in an internal space which is formed by the translucent cover TLC and the housing TLH. For example, a chip-type LED lamp can use as the taillight source TLG. The translucent cover TLC is made of a light-transmitted material and allows the light from the taillight source TLG to transmit. For example, the translucent cover TLC is formed by a transparent or colored transparent resin. As shown in FIGS. 1 to 4, the taillight TL is disposed between the left side cover 41L and the right side cover 41R at the rear portion of the scooter-type vehicle 1. More specifically, the taillight TL is disposed between the left side cover 41L and the right side cover 41R and between the upper cover 42 and the winker cover 50 at the rear portion of the scooter-type vehicle 1.

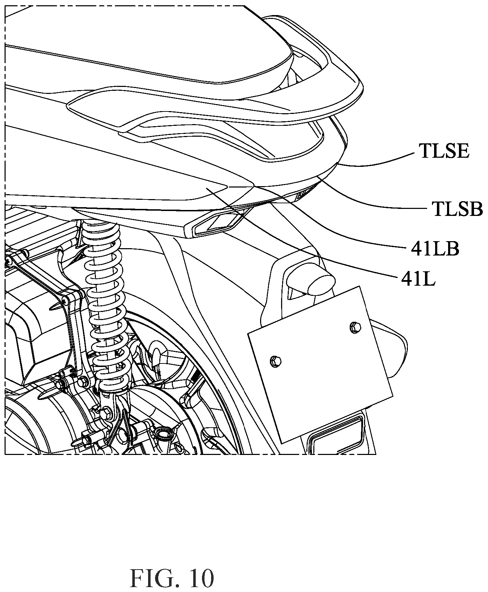

When the taillight TL is disposed at the rear portion of the vehicle, the rear ends 41LB, 41RB of the side covers 41 overlap the taillight TL in the side view as described above. Therefore, as shown in FIGS. 1 and 2, a part of the taillight TL is covered from the left and right sides of the taillight TL by the side covers 41 of the rear cover 40. In addition, a part of the taillight TL is covered from the upper side of the taillight TL by the upper cover 42 of the rear cover 40. In addition, a part of the taillight TL is covered from the lower side of the taillight TL by the winker cover 50 of the rear cover 40. On the other hand, as shown in FIGS. 1 to 5, the entire portion or a part of the translucent cover TLC of the taillight TL is not covered by the rear cover 40 and is exposed. In the present invention, an exposed portion of the translucent cover TLC, which is not covered by the rear cover 40, is referred to as a light-emitting surface TLS.Thus, the taillight TL has the light-emitting surface TLS. Since the light from the taillight source TLG is transmitted through the light-emitting surface TLS and is emitted to the outside, the light from the taillight source TLG can be confirmed from the outside. In addition, as shown in FIGS. 1, 2, 8, and 9, the light-emitting surface TLS includes an upper light-emitting surface TLSU which has an upper edge extending upward and forward from a rear end TLSB of the light-emitting surface TLS, and a lower light-emitting surface TLSD which has a lower edge extending downward and forward from the rear end TLSB of the light-emitting surface TLS in the side view. In other words, when viewed from the side, the translucent cover TLC includes the upper light-emitting surface TLSU which is not covered by the rear cover 40 and includes the upper edge extending upward and forward from the rear end TLSB of the translucent cover TLC, and the lower light-emitting surface TLSD which is not covered by the rear cover 40 and includes the lower edge extending downward and forward from the rear end TLSB of the translucent cover TLC. As shown in FIG. 10, the translucent cover TLC includes the upper light-emitting surface TLSU extending upward and forward from a rear edge TLSE of the translucent cover TLC, and the lower light-emitting surface TLSD extending downward and forward from the rear edge TLSE of the translucent cover TLC. The rear end TLSB of the light-emitting surface TLS in the side view is the rear end TLSB of the translucent cover TLC in the side view, and the rear edge TLSE of the translucent cover TLC is the rear edge TLSE of the light-emitting surface TLS. Therefore, the taillight TL also has a shape which becomes thinner toward the rear in the side view and contributes to creating a sporty appearance for the vehicle. At the same time, since the taillight TL includes the upper light-emitting surface TLSU extending upward and forward from the rear end TLSB of the light-emitting surface TLS, it is easy for a driver of a following vehicle to confirm a lighting state of the taillight TL from the upper light-emitting surface TLSU and the visual recognition of the taillight TL can be ensured. More specifically, in the present invention, a portion of the translucent cover TLC, which is covered by the rear cover 40 and does not belong to the light-emitting surface TLS, corresponds to a portion of the translucent cover TLC where the light, which is emitted from the taillight source TLG, cannot be confirmed from viewpoint from the outside. Therefore, for example, the portion of the translucent cover TLC, where the light emitted from the taillight source TLG cannot be confirmed when viewed from above but the light emitted from the taillight source TLG can be confirmed when viewed from behind, belongs to the light-emitting surface TLS and does not correspond to the portion which is covered by the rear cover 40.

The upper light-emitting surface TLSU and the lower light-emitting surface TLSD may be formed so as to extend linearly or to extend in an arc shape. In this embodiment, the upper light-emitting surface TLSU and the lower light-emitting surface TLSD extend so as to form a slight arc in the side view.

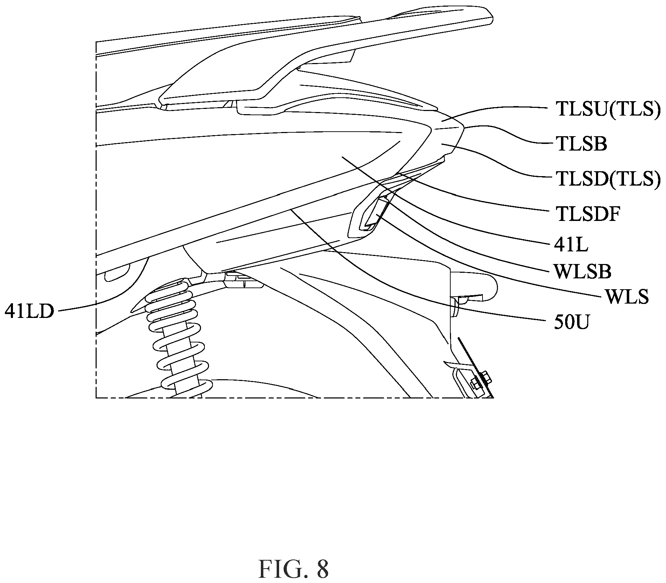

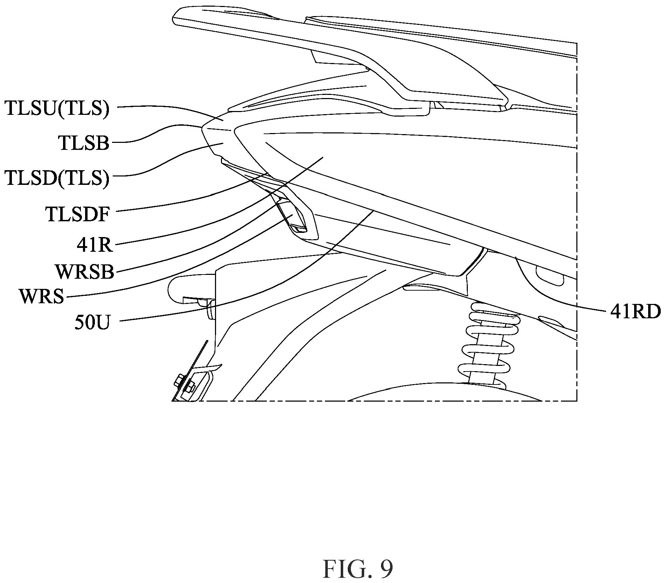

As shown in FIGS. 8 and 9, the rear end TLSB of the light-emitting surface TLS, i.e., the rear end TLSB of the translucent cover TLC, is disposed behind the rear ends 41LB, 41RB of the side cover 41. Therefore, at least a portion of the light-emitting surface TLS is not covered by the side covers 41L, 41R in the side view of the vehicle. As a result, it is possible to ensure the visual recognition of the taillight TL from the sides while making the taillight TL compact, since the light-emitting surface TLS of the taillight TL can be observed not only from the rear side or a diagonally rear side of the vehicle but also from the sides.

As shown in FIG. 4, the left and right edges of the upper light-emitting surface TLSU are respectively adjacent to the upper edge 41LU of the left side cover 41L and the upper edge 41RU of the right side cover 41R. The left and right edges of the lower light-emitting surface TLSD are respectively adjacent to the lower edge 41LD of the left side cover 41L and the lower edge 41RD of the right side cover 41R. As shown in the rear view of FIG. 4, the bottom edge of the lower light-emitting surface TLSD is adjacent to the winker cover 50 and the top edge of the upper light-emitting surface TLSU is adjacent to the upper cover 42.

In addition, more preferably, as shown in the side views of FIGS. 1 and 2 and in the rear view of FIG. 4, the lower end of the left edge of the upper light-emitting surface TLSU, i.e., the upper end of the left edge of the lower light-emitting surface TLSD, is adjacent to the rear end 41LB of the left side cover 41L where the upper edge 41LU and the lower edge 41LD of the left side cover 41L intersect. Similarly, the lower end of the right edge of the upper light-emitting surface TLSU, i.e., the upper end of the right edge of the lower light-emitting surface TLSD, is adjacent to the rear end 41RB of the right side cover 41R where the upper edge 41RU and lower edge 41RD of the right side cover 41R intersect.

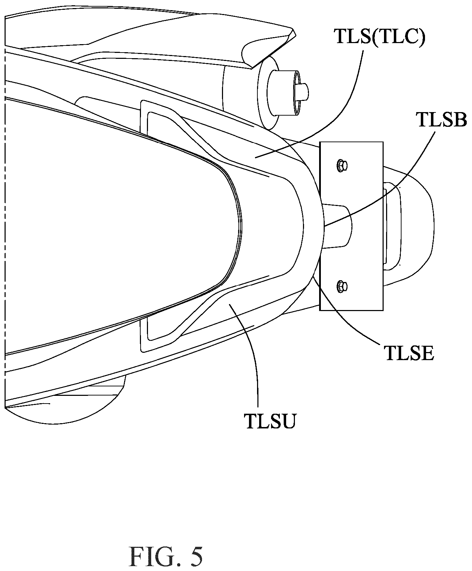

In addition, the rear edge TLSE of the translucent cover TLC, i.e., the rear edge TLSE of the light-emitting surface TLS, is connected to the rear end 41LB of the left side cover 41L where the upper edge 41LU and the lower edge 41LD of the left side cover 41L intersect and to the rear end 41RB of the right side cover 41R where the upper edge 41RU and the lower edge 41RD of the right side cover 41R intersect, so that a flow line can be formed so as to run from the right side of the vehicle to the rear side and then across to the left side, as shown in FIGS. 4 and 10. In addition, the rear end TLSB of the light-emitting surface TLS, i.e., the rear end TLSB of the translucent cover TLC, is disposed behind the rear ends 41LB, 41RB of the side covers 41, so that the rear edge TLSE of the translucent cover TLC is formed in an arc shape so as to connect the two rear ends 41LB, 41RB of the side covers 41 as shown in FIG. 4 or FIG. 5. It is possible to ensure the visual recognition of the taillight TL from the sides while making the taillight TL compact, since the light-emitting surface TLS of the taillight TL can be observed even from the side and the lighting state of the taillight TL can be confirmed as shown in FIGS. 1 and 2.

Furthermore, the rear edge TLSE of the translucent cover TLC in this embodiment is formed such as an arc as described above, but the shape of the rear edge TLSE is not limited to this configuration. As long as the rear edge TLSE extends from the rear ends 41LB, 41RB of the side covers 41 toward the center of the vehicle in the left-right direction and is formed so that the rear end TLSB is disposed behind the rear ends 41LB, 41RB of the side covers 41, a similar effect can be achieved. For example, the rear edge TLSE may be formed substantially V-shaped from following the rear ends 41LB, 41RB of the side cover 41.

In addition to the taillight TL, a stop light SL is disposed at the rear portion of the scooter-type vehicle 1. Generally, the taillight TL and the stop light SL are disposed adjacent to each other in the up-down direction at the rear portion of the scooter-type vehicle 1. In addition, the taillight TL can be disposed so as to be positioned above the stop light SL which includes the stop light source SLG and the taillight TL can be disposed so as to be positioned below the stop light SL.

In addition, as shown in FIG. 5, more preferably, the upper light-emitting surface TLSU of the light-emitting surface TLS of the taillight TL is formed in a substantially U-shape. Therefore, the width in the left-right direction of the taillight TL is restrained while lengthening both sides and it is possible to increase the size of the upper light-emitting surface TLSU of the light-emitting surface TLS. Thereby, it is possible to ensure the area of the light-emitting surface TLS while miniaturizing the taillight TL. As a result, the rear portion of the scooter-type vehicle 1 can be made even smaller while ensuring the visual recognition of the taillight TL.

More preferably, a width in the left-right direction of the upper light-emitting surface TLSU narrows toward the rear. The left-right width of the scooter-type vehicle 1 can become smaller toward the rear. As a result, the rear portion of the scooter-type vehicle 1 can be made even smaller while ensuring the visual recognition of the taillight TL.

### <Variation>

The present invention can be applied to a taillight TL of a unit type in which the taillight source TLG and the stop light source SLG are housed in an internal space formed by a single shared translucent cover TLC and a single shared housing TLH. Here, the configuration shown in FIG. 6 will be described as an example. The taillight TL of the unit type can be configured by further disposing the stop light source SLG on a substrate TLB shown in FIG. 6. In this case, both of the taillight source TLG and the stop light source SLG are mounted to a common housing TLH. In addition, the light from the taillight source TLG and the light from the stop light source SLG is transmitted through the shared translucent cover TLC and are emitted to the outside.

In addition, the taillight source TLG and the stop light source SLG are disposed adjacent to each other in the up-down direction inside the taillight TL of the unit type. For example, in the embodiment shown in FIG. 6, the stop light source SLG is disposed on the substrate TLB so that the taillight source TLG is disposed above the stop light source SLG. However, the taillight source TLG may be disposed below the stop light source SLG.

In the case of the above-mentioned taillight TL of the unit type in which the taillight source TLG and the stop light source SLG are disposed, when the taillight TL of the unit type is disposed at the rear portion of the vehicle, as explained above with reference to FIGS. 1 to 5, a part of the taillight TL is covered from the left and right sides of the taillight TL by the side covers 41L, 41R. The rear ends 41LB, 41RB of the side covers 41 overlap the taillight TL in the side view. On the other hand, the entire or a part of the translucent cover TLC of the taillight TL, is exposed, and serves as the light-emitting surface TLS which is shared by the taillight source TLG and the stop light source SLG. Similarly, the light-emitting surface TLS is formed so as to include an upper light-emitting surface TLSU extending upward and forward from the rear edge TLSE of the light-emitting surface TLS, and the lower light-emitting surface TLSD extending downward and forward from the rear edge TLSE of the light-emitting surface TLS. For example, in case that the taillight source TLG is positioned above the stop light source SLG as the embodiment of FIG. 6, the light from the taillight source TLG mainly transmits through the upper light-emitting surface TLSU and is emitted to the outside, and the light from the stop light source SLG mainly transmits through the lower light-emitting surface TLSD and is emitted to the outside. Therefore, the taillight TL has a shape which becomes thinner toward the rear in the side view and contributes to creating a sporty appearance for the vehicle, and it is easy for the driver of the following vehicle to confirm the lighting state of the taillight TL from the upper light-emitting surface TLSU and the visual recognition of the taillight TL is ensured. Even if this arrangement is adopted, it is possible for a part of the light from the stop light source SLG to transmit through the upper light-emitting surface TLSU and be emitted to the outside.

Similarly, the rear end TLSB of the shared light-emitting surface TLS, i.e., the rear end TLSB of the translucent cover TLC, is disposed behind the rear ends 41LB and 41RB of the side covers 41. Therefore, at least a portion of the light-emitting surface TLS is not covered by the side covers 41L, 41R in the side view of the vehicle. As a result, the visual recognition of the taillight TL and the stop light SL can be ensured from the sides, since a light emission state of the taillight source TLG and the stop light source SLG from the light-emitting surface TLS can be confirmed from the sides of the vehicle.

### <Winker>

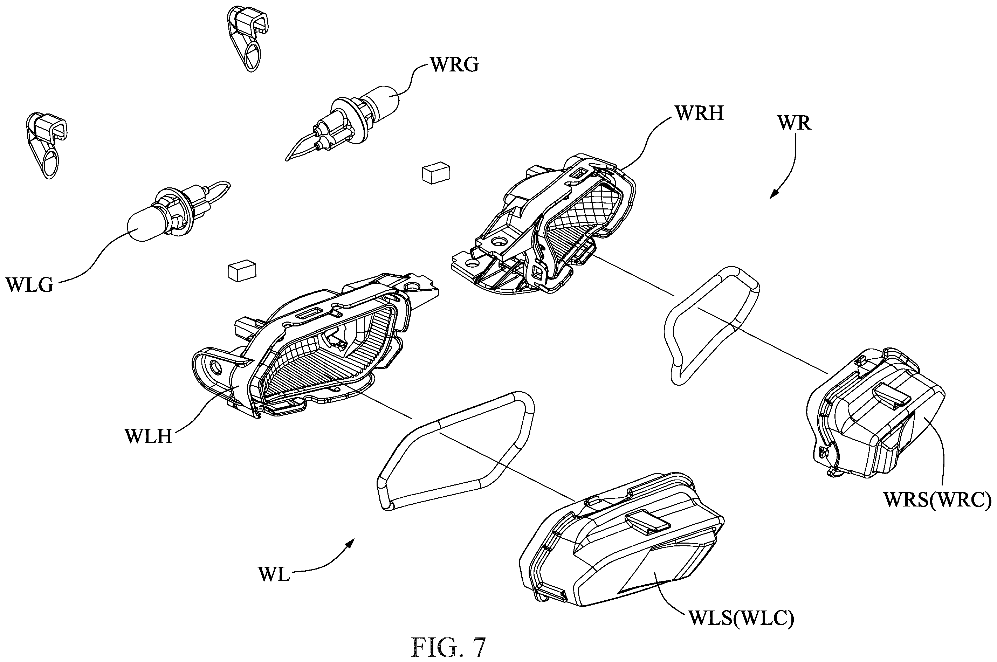

As shown in FIG. 4, the scooter-type vehicle 1 includes the left winker WL disposed on the left side with respect to the center of the vehicle in the left-right direction at the rear portion of the vehicle in the rear view, and the right winker WR disposed on the right side with respect to the center of the vehicle in the left-right direction at the rear portion of the vehicle in the rear view. As shown in FIG. 7, the left winker WL includes a light source WLG of the left winker WL, a housing WLH to which the light source WLG is mounted, and a left winker translucent cover WLC which transmits light from the light source WLG. The light source WLG is disposed in an internal space which is formed by the left winker translucent cover WLC and the housing WLH. Similarly, the right winker WR includes a light source WRG of the right winker WR, a housing WRH to which the light source WRG is mounted, and a right winker translucent cover WRC which transmits light from the light source WRG. The light source WRG is disposed in an internal space which is formed by the right winker translucent cover WRC and the housing WRH. The left winker translucent cover WLC and the right winker translucent cover WRC are formed of a light-transmitted material and allows the light from the light sources WLG and WRG to transmit. For example, the left winker translucent cover WLC and the right winker translucent cover WRC are formed by a transparent or colored transparent resin.

In this embodiment, an entire portion of the left winker WL and the right winker WR is disposed under the taillight TL in the rear view. In addition, an entire portion of the left winker WL and the right winker WR is disposed under the taillight TL in the side view.

As described above, the periphery of the left winker WL and the right winker WR is covered by the winker cover 50, but an entire portion or a part of the left winker translucent cover WLC of the left winker WL and the right winker translucent cover WRC of the right winker WR is exposed. In the present invention, an exposed portion of the left winker translucent cover WLC, which is not covered by the winker cover 50, is referred to as the left winker light-emitting surface WLS, and an exposed portion of the right winker translucent cover WRC, which is not covered by the winker cover 50, is referred to as the right winker light-emitting surface WRS. In other words, the winker cover 50 covers the periphery of the left winker WL and the right winker WR so as to expose only the left winker light-emitting surface WLS and the right winker light-emitting surface WRS in the rear view.

Therefore, the left winker WL includes the left winker light-emitting surface WLS, and the right winker WR includes the right winker light-emitting surface WRS. Since the light from the light source WLG of the left winker WL is transmitted through the left winker light-emitting surface WLS and is emitted to the outside, the light from the light source WLG can be confirmed from the outside. In addition, since the light from the light source WRG of the right winker WR is transmitted through the right winker light-emitting surface WRS and is emitted to the outside, the light from the light source WRG can be confirmed from the outside.

To explain in more detail, in the present invention, a portion of the left winker translucent cover WLC, which is covered by the winker cover 50 and does not belong to the left winker light-emitting surface WLS, corresponds to a portion of the left winker translucent cover WLC where the light, which is emitted from the light source WLG of the left winker WL, cannot be confirmed from any point viewed from the outside. Similarly, a portion of the right winker translucent cover WRC, which is covered by the winker cover 50 and does not belong to the right winker light-emitting surface WRS, corresponds to a portion of the right winker translucent cover WRC where the light, which is emitted from the light source WRG of the right winker WR, cannot be confirmed from any point viewed from the outside. Therefore, for example, the portion of the left winker translucent cover WLC, where the light emitted from the light source WLG of the left winker WL cannot be confirm when viewed from the sides but can be confirmed when viewed from behind, belongs to the left winker light-emitting surface WLS and does not correspond to the portion which is covered by the left winker translucent cover WLC.

Thus, unlike conventional scooter-type vehicles in which left and right winkers are disposed on the side covers of the vehicle, in the present invention, no space is used in the side covers 41L, 41R for disposing the left winker WL and the right winker WR since the left winker WL and right winker WR are disposed under the taillight TL. As a result, this configuration makes it possible to further reduce the left-right width of the side covers 41L, 41R and makes them more compact. Therefore, the vehicle is made smaller and the scooter-type vehicle 1 becomes a sportier vehicle. In addition, since the winker cover 50 exists as a substantial partition between the left and right winkers WL, WR and the taillight TL, a halo is less likely to create around the left winker WL and the right winker WR when they are emitting light. Therefore, even if miniaturization is pursued by disposing the left winker WL and the right winker WR so as to be close to the taillight TL, the light from the taillight TL can be more clearly distinguished from the light from the left winker WL and the right winker WR and the identification of both lights is ensured since interference with the light of the turned-on taillight TL is greatly reduced.

More preferably, as shown in the rear view of FIG. 4, an entire portion of the left and right winker light-emitting surfaces WLS, WRS is disposed between the left end TLSL and the right end TLSR of the light-emitting surface TLS of the taillight TL. In other words, the left end TLSL of the light-emitting surface TLS of the taillight TL is disposed further leftward than a left end WLSL of the left winker light-emitting surface WLS in the rear view, and the right end TLSR of the light-emitting surface TLS of the taillight TL is disposed further rightward thana right end WLSR of the right winker light-emitting surface WRS in the rear view. Therefore, the rear portion of the scooter-type vehicle 1 is further reduced in size and the scooter-type vehicle 1 becomes a sportiervehicle, since the left-right width of the winker cover 50, which covers the periphery of the left winker WL and the right winker WR, can be further reduced and becomes thinner from the upper side of the vehicle to the lower side of the vehicle in the rear view. In the embodiment of the present invention, the left and right ends of the upper light-emitting surface TLSU correspond to the left end TLSL and right end TLSR of the light-emitting surface TLS of the taillight TL, and the left-right width of the upper light-emitting surface TLSU becomes wider. But the present invention is not limited to this configuration. It is possible to modify the embodiment so that the left and right ends of the lower light-emitting surface TLSD correspond to the left end TLSL and right end TLSR of the light-emitting surface TLS of the taillight TL and the left-right width of the lower light-emitting surface TLSD becomes wider.

More preferably, as shown in Figs. 1 and 2, the left winker light-emitting surface WLS and the right winker light-emitting surface WRS are disposed so as to be exposed from the winker cover 50 in the side view. In other words, the left winker light-emitting surface WLS and the right winker light-emitting surface WRS are formed so as to have a portion which is exposed from the winker cover 50 in the side view. As a result, even if the winker cover 50 covers the periphery of the left winker WL and the right winker WR, the visual recognition of the left winker WL and the right winker WR from the sides can be ensured since it is possible to confirm the left winker WL or the right winker WR from the sides when the left winker WL or the right winker WR blinks.

On the other hand, it is also conceivable to dispose the left winker light-emitting surface WLS and the right winker light-emitting surface WRS so that the left winker light-emitting surface WLS and the right winker light-emitting surface WRS are not exposed from the winker cover 50 in the side view. In this case, the rear portion of the scooter-type vehicle 1 is further reduced in size and the scooter-type vehicle 1 becomes a sportier vehicle, since the left winker WL and the right winker WR become smaller in the side view.

In addition, as shown in FIGS. 8 and 9, more preferably, the rear end WLSB of the left winker light-emitting surface WLS of the left winker WL and the rear end WRSB of the right winker light-emitting surface WRS of the right winker WR are disposed further forward than the rear end TLSB of the light-emitting surface TLS which is the rear end of the taillight TL in the side view. In this manner, like the trend of the lower edge 50D of the winker cover 50, the rear end TLSB of the light-emitting surface TLS of the taillight TL is positioned further upward and rearward than the rear end WLSB of the left winker light-emitting surface WLS and the rear end WRSB of the right winker light-emitting surface WRS. As a result, the rear portion of the vehicle can become thinner toward the rear. Therefore, the vehicle is reduced in size and the scooter-type vehicle 1 becomes a sportier vehicle.

In addition, more preferably, the rear end WLSB of the left winker light-emitting surface WLS and the rear end WRSB of the right winker light-emitting surface WRS are disposed further forward than the front end TLSDF of the lower light-emitting surface TLSD of the taillight TL in the side view. In this manner, like the trend of the lower edge 41LD of the left side cover 41L, the lower edge 41RD of the right side cover 41R, and the lower edge 50D of the winker cover 50, the rear end TLSB of the light-emitting surface TLS of the taillight TL is positioned further upward and rearward than the rear end WLSB of the left winker light-emitting surface WLS and the rear end WRSB of the right winker light-emitting surface WRS. As a result, the rear portion of the vehicle become further thinner toward the rear. In addition, since the left winker light-emitting surface WLS and the right winker light-emitting surface WRS do not overlap with the lower light-emitting surface TLSD of the taillight TL in the front-rear direction of the vehicle, it is possible to more clearly distinguish between the light from the taillight TL and the light from the left and right winkers WL, WR in the side view and the identification of both lights can be ensured. Therefore it is possible to ensure the identification of the taillight TL and the left and right winkers WL, WR in the side view while reducing the size of the vehicle.

In addition, more preferably, the left winker light-emitting surface WLS extends downward and forward from the rear end WLSB, and the right winker light-emitting surface WRS extends downward and forward from the rear end WRSB in the side view as well as the lower light-emitting surface TLSD of the taillight TL. As a result, the left winker light-emitting surface WLS and the right winker light-emitting surface WRS also have a shape which becomes thinner toward the rear in the side view as well as the taillight TL and this configuration further contributes to creating the sporty vehicle.

### <Effects of the embodiment>

[C1] The scooter-type vehicle 1 of the present invention comprises a seat 9 on which a rider sits, a seat rail 24 supporting the seat 9 and extending toward a rear side of the vehicle, a rear cover 40 including a left side cover 41L, a right side cover 41R and a winker cover 50, the left side cover 41L and the right side cover 41R being disposed lower the seat 9 and outside the seat rail 24 on a left side and a right side of the vehicle respectively, a taillight TL disposed between the left side cover 41L and the right side cover 41R in a rear view, a left winker WL disposed on the left side with respect to a center of the vehicle in a left-right direction, the left winker WL including a left winker translucent cover WLC and at least a portion of the left winker WL being covered by the winker cover 50 in the rear view, and a right winker WR disposed on the right side with respect to the center of the vehicle in the left-right direction, the right winker WR including a right winker translucent cover WRC and at least a portion of the right winker WR being covered by the winker cover 50. The winker cover 50 is disposed under the taillight TL in the rear view. The left winker translucent cover WLC includes a left winker light-emitting surface WLS which is not covered by the winker cover 50. The right winker translucent cover WRC includes a right winker light-emitting surface WRS which is not covered by the winker cover 50. At least a portion of upper edges 41LU, 41RU of each of the left side cover 41L and the right side cover 41R extends rearward in the side view. At least a portion of lower edges 41LD, 41RD of each of the left side cover 41L and the right side cover 41R extends rearward and upward in the side view and rear ends 41LB, 41RB, at which the upper edges 41LU, 41RU and the lower edge 41LD, 41RD of each of the left side cover 41L and the right side cover 41R intersect, overlaps with the taillight TL in the side view. The taillight TL includes a translucent cover TLC. The translucent cover TLC includes an upper light-emitting surface TLSU which is not covered by the rear cover 40 and extends upward and forward from a rear edge TLSE of the translucent cover TLC, and a lower light-emitting surface TLSD which is not covered by the rear cover 40 and extends upward and forward from the rear edge TLSE of the translucent cover TLC. A rear end TLSB of the translucent cover TLC is disposed further rearwardthan the rear ends 41LB, 41RB of each of the left side cover 41L and the right side cover 41R. The left winker WL and the right winker WR are disposedunder the taillight TL in the rear view. An entire portion of the left winker light-emitting surface WLS and the right winker light-emitting surface WRS is disposed between a left end TLSL and a right end TLSR of the translucent cover TLC of the taillight TL in the rear view.

According to the present invention, unlike conventional scooter-type vehicles in which the left and right winkers are disposed on the side covers of the vehicle so as to be disposed on the left and right sides of the taillight, no space is used in the side covers 41 for disposing the left winker WL and the right winker WR since the left winker WL and right winker WR are disposed under the taillight TL in the rear view. As a result, this configuration makes it possible to further reduce the left-right width of the side covers 41L, 41R and makes them more compact. At least a portion of the upper edge 41LU, 41RU of the side covers 41 extends rearward in the side view, and at least a portion of the lower edge 41LD, 41RD extends rearward and upward in the side view. Therefore, the side covers 41 include a shape which gradually becomes thinner toward the rear portion of the vehicle and becomes lighter and smaller toward the rear portion of the vehicle. As a result, the scooter-type vehicle 1 can be reduced in weight and size.

For the reasons described above, the present invention provides a sportier vehicle than the conventional scooter-type vehicle. In addition, since the taillight TL and the left and right winkers WL, WR are separate, the taillight TL and the left and right winkers WL, WR can each be made compact. Therefore, it is easy to utilize efficiently the limited space of the compact vehicle.

In addition, the taillight TL of the present invention is formed to include then upper light-emitting surface TLSU extending upward and forward from the rear end TLSB of the translucent cover TLC of the taillight TL, and the lower light-emitting surface TLSD extending downward and forward from the rear end TLSB of the translucent cover TLC of the taillight TL. Therefore, the taillight TL can contribute to the creation of a sporty vehicle, since the taillight TL includes a shape which becomes thinner toward the rear in the side view. In addition, the visual recognition of the taillight TL can be ensured, since the taillight TL includes the upper light-emitting surface TLSU extending upward and forward from the rear end TLSB of the translucent cover TLC. Therefore, it is easy for the driver of the following vehicle to confirm the lighting state of the taillight TL.

In addition, the rear ends 41LB, 41RB, at which the upper edges 41LU, 41RU and the lower edge 41LD, 41RD of the side cover 41 intersect, overlaps with the taillight TL in the side view and the rear end TLSB of the translucent cover TLC of the taillight TL is disposed in the rear side of the rear ends 41LB, 41RB of the side cover 41. Therefore, since it is possible to confirm the light emission state of the taillight TL even from the side, it is possible to ensure the visual recognition of the taillight TL from the side while making the taillight TL compact.

On the other hand, the winker cover 50 disposed on the lower side of the side cover 41 covers the periphery of the left winker WL and the right winker WR so as to expose the left winker light-emitting surface WLS and the right winker light-emitting surface WRS in the rear view. As a result, since the winker cover 50 exists as the substantial partition between the left and right winkers WL, WR and the taillight TL, the halo is less likely to create around the left and right winker WL, WR when they are emitting. Therefore, even if the compact side cover 41 is pursued by disposing the left winker WL and the right winker WR so as to be close to the taillight TL, the light from the taillight TL can be more clearly distinguished from the lights from the left winker WL and the right winker WR, and the identification of both lights is ensured, since interference with the light of the turned-on taillight TL is greatly reduced. In addition, since the left and right winkers WL, WR and the taillight TL are separate, the taillight TL itself can be made compact and the sporty scooter-type vehicle 1 prevents the rear portion of the vehicle from increasing in size is provided.

As a result, the beneficial effect of the present invention is to provide the sporty scooter-type vehicle 1 which prevents the rear portion of the vehicle from increasing in size while ensuring the visual recognition of the taillight TL and the left and right winkers WL, WR and the identification of the left and right winkers WL, WR.

[C2] In one preferred embodiment of the present invention, the upper edge 50U of the winker cover 50 extends rearward along the lower edge 41LD of the side cover 41 in the side view and the lower edge 50D of the winker cover 50 extends rearward and upward from the front side in the side view.

According to one preferred embodiment of the present invention described above, the upper edge 50U of the winker cover 50 extends rearward along the lower edge 41LD of the side cover 41, and the lower edge 50D of the winker cover 50 extends rearward and upward from the front. Therefore, the winker cover 50 can be provided adjacent to the side covers 41 and the thickness of the rear portion of the vehicle in the up-down direction can be reduced, and the rear portion of the vehicle can be formed so as to gradually become thinner toward the rear in accordance with a shape of the side covers 41. As a result, the vehicle can be reduced in weight and size and the scooter-type vehicle 1 becomes a sportier vehicle than the conventional scooter-type vehicles.

[C3] In one preferred embodiment of the present invention, the entire portion of the left winker light-emitting surface WLS and the right winker light-emitting surface WRS is disposed between the left end TLSL and the right end TLSR of the light-emitting surface TLS of the taillight TL in rear view.

According to one preferred embodiment of the present invention described above, since the entire portion of the left winker light-emitting surface WLS and the right winker light-emitting surface WRS is disposed between the left end TLSL and the right end TLSR of the light-emitting surface TLS of the taillight TL in rear view, the left-right width of the winker cover 50, which covers the periphery of the left winker WL and the right winker WR, can be made smaller.

[C4] In one preferred embodiment of the present invention, the left winker light-emitting surface WLS and the right winker light-emitting surface WRS are formed so as to have portions exposed from the winker cover 50 in the side view.

According to one preferred embodiment of the present invention, the left winker light-emitting surface WLS and the right winker light-emitting surface WRS are formed so as to have portions which exposed from the winker cover 50 in the side view. Therefore, even if the winker cover 50 covers the periphery of the left winker WL and the right winker WR, the visual recognition of the left winker WL and the right winker WR from the sides can be ensured since it is possible to confirm the left winker WL or the right winker WR from the sides when the left winker WL or the right winker WR blinks.

[C5] In one preferred embodiment of the present invention, the left winker light-emitting surface WLS and the right winker light-emitting surface WRS are not exposed from the winker cover 50 in the side view.

According to one preferred embodiment of the present invention described above, the rear portion of the scooter-type vehicle 1 is further reduced in size and the scooter-type vehicle 1 becomes a sportier vehicle, since the left winker WL and the right winker WR can be made smaller in the side view.

[C6] In one preferred embodiment of the present invention, the upper light-emitting surface TLSU of the taillight TL is formed in a substantially U-shape in a plan view According to one preferred embodiment of the present invention described above, the left-right width of the taillight TL is restrained while lengthening both sides and it is possible to increase the size of the light-emitting surface TLS, since the upper light-emitting surface TLSU of the taillight TL is formed in the U-shape in the planar view. Thereby, it is possible to ensure area of the light-emitting surface TLS. As a result, the rear portion of the scooter-type vehicle 1 can be made even smaller while ensuring the visual recognition of the taillight TL.

[C7] In one preferred embodiment of the present invention, a left-right width of the upper light-emitting surface TLSU of the taillight TL reduces toward the rear side in the plan view.

According to one preferred embodiment of the present invention described above, the left-right width of the scooter-type vehicle 1 can become smaller toward the rear, since the left-right width of the upper light-emitting surface TLSU of the taillight TL reduces toward the rear side in the plan view. As a result, the rear portion of the scooter-type vehicle 1 can be made even smaller while ensuring the visual recognition of the taillight TL.

[C8] In one preferred embodiment of the present invention, the rear end of the left winker light-emitting surface WLS and the rear end of the right winker light-emitting surface WRS are disposed further forward than the rear end TLSB of the light-emitting surface TLS of the taillight TL in the side view.

According to one preferred embodiment of the present invention described above, like the trend of the lower edge 50D of the winker cover 50, the rear end TLSB of the light-emitting surface TLS of the taillight TL is positioned further upward and rearward than the rear end WLSB of the left winker light-emitting surface WLS and the rear end WRSB of the right winker light-emitting surface WRS. As a result, the rear portion of the vehicle can become thinner toward the rear. Therefore, the vehicle is reduced in size and the scooter-type vehicle 1 becomes a sportier vehicle.

[C9] In one preferred embodiment of the present invention, the rear end of the left winker light-emitting surface WLS and the rear end of the right winker light-emitting surface WRS are disposed further forward thanthe front end of the lower light-emitting surface TLSD of the taillight TL in the side view.

According to one preferred embodiment of the present invention described above, similarly, like the trend of the lower edge 50D of the winker cover 50, the rear end TLSB of the light-emitting surface TLS of the taillight TL is positioned further upward and rearward than the rear end WLSB of the left winker light-emitting surface WLS and the rear end WRSB of the right winker light-emitting surface WRS in the side view. As a result, the rear portion of the vehicle can become thinner toward the rear. As a result, the vehicle can be reduced in size and the scooter-type vehicle 1 becomes a sportier vehicle than the conventional scooter-type vehicles. In addition, it is possible to more clearly distinguish between the light from the taillight TL and the light from the left and right winkers WL, WR in the side view and the identification of both lights can be ensured, since the left winker light-emitting surface WLS and the right winker light-emitting surface WRS do not overlap with the lower light-emitting surface TLSD of the taillight TL in the front-rear direction of the vehicle. Therefore it is possible to ensure the identification of the taillight TL and the left and right winkers WL, WR from the sides while reducing the size of the vehicle.

[C10] In one preferred embodiment of the present invention, the left winker light-emitting surface WLS extends downward and forward from a rear end thereof in the side view. The right winker light-emitting surface WRS extends downward and forward from the rear end thereof in the side view.

According to one preferred embodiment of the present invention described above, the left winker light-emitting surface WLS and the right winker light-emitting surface WRS become thinner toward the rear in the side view as well as the taillight TL and contributes to the creation of the sporty vehicle.

[C11] In one preferred embodiment of the present invention, the winker cover 50 is disposed between the left side cover 41L and the right side cover 41R in the rear view.

According to one preferred embodiment of the present invention described above, the left-right width of the winker cover 50 which covers the periphery of the left winker WL and the right winker WR can be further reduced, since the winker cover 50 is disposed between the left side cover 41L and the right side cover 41R in the rear view. Therefore, the rear portion of the scooter-type vehicle 1 is further reduced in size and the scooter-type vehicle 1 becomes a sportier vehicle.

Although the embodiment of the present invention includes been described above, those skilled in the art can make various design modifications based on the teachings of the present invention without departing from the scope of the present invention.

For example, in the embodiment described above, the body cover 12 such as the front cover 30, the rear cover 40, the footrest portion 31 and the center cover 32 is an exterior member and may be one-piece molded products formed by injection molding, may be configured by multiple members, or may be formed integrally from multiple cover members. For example, in the rear cover 40, the side cover 41, the winker cover 50, and the upper cover 42 may be formed integrally, or may be formed separately and then assembled. Alternatively, the side cover 41 and the winker cover 50, which are integrally formed, may be combined with the separate upper cover 42.

In addition, it is preferable for the vehicle body cover 12 to appear overall symmetrically in the left-right direction in terms of appearance and manufacturing, but it does not have to appear symmetrical.

In this embodiment, when the taillight source TLG is a white chip-type LED lamp and the white chip-type LED lamp of the taillight source TLG does not turn on, the diffusion member TLE may be red. However, the present invention is not limited to this. For example, when a red chip-type LED lamp may be used and the taillight source TLG does not turn on, the diffusing member TLE may be milky white.

In addition, in this embodiment, the diffusing member TLE is a transparent resin to which a light diffusing agent is added, but the present invention is not limited to this. The diffusion member TLE may have a function which makes the light appear to shine over a wider area than a range of the light source. For example, it may be a transparent resin with lens cut processing or a light guiding rod.

In addition, in this embodiment, the taillight TL includes the diffusion member TLE, but the diffusion member TLE may be omitted.

In this embodiment, the taillight TL includes an upper light-emitting surface TLSU of the light-emitting surface TLS which is formed in a substantially U-shape. However, the present invention is not limited to this and any shape may be formed such that it limits the left-right width of the taillight and the total area increases by lengthening both sides. For example, it may be other broken line shapes such as a V-shape or a W-shape. It may also be a curved shape or a straight shape.

The present invention is also applicable to the scooter-type vehicle such as a motorcycle, a motorcycle three-wheeler, an electric motorcycle, and an electric three-wheeler.

### REFERENCE SIGNS LIST

1 a scooter-type vehicle
2 a body frame
3 a steering mechanism
8 a front wheel
9 a seat
10 a power unit
11 a rear wheel
12 a body cover
13 a license bracket
30 a front cover
301 a side cover
302 a rear side cover
303 a front side cover
31 a footrest portion
32 a center cover
40 a rear cover
41 a side cover
41L a left side cover
41LB a rear end
41LD a lower edge
41LU an upper edge
41R a right side cover
41RB a rear end
41RD a lower edge
41RU an upper edge
42 an upper cover
50 a winker cover
50U an upper edge
50UB a rear end
50D a lower edge
50DB a rear end
60 a grip
WL a left winker
WLH a housing
WLG a light source
WLC a left winker translucent cover
WLS a left winker light-emitting surface
WLSL a left end
WLSB a rear end
WR a right winker
WRH a housing
WRG a light source
WRC a right winker translucent cover
WRS a right winker light-emitting surface
WRSB a rear end
TL a taillight
TLB a substrate
TLC a translucent cover
TLE a diffusion member
TLG a taillight source
TLH a housing
TLS a light-emitting surface
TLSU a upper light-emitting surface
TLSD a lower light-emitting surface
TLSDF a front end
TLSL a left end
TLSR a right end
TLSB a rear end
TLSE a rear edge
SL a stop light
SLG a stop light source

## Claims

1. A scooter-type vehicle comprising:
a seat on which a rider sits;
a seat rail supporting the seat and extending toward a rear side of the vehicle;
a rear cover including a left side cover, a right side cover and a winker cover, the left side cover and the right side cover being disposed lower than the seat and outside the seat rail on a left side and a right side of the vehicle respectively ;
a taillight disposed between the left side cover and the right side cover in a rear view;
a left winker disposed on the left side with respect to a center of the vehicle in a left-right direction, the left winker including a left winker translucent cover and at least a portion of the left winker being covered by the winker cover in the rear view; and
a right winker disposed on the right side with respect to the center of the vehicle in the left-right direction, the right winker including a right winker translucent cover and at least a portion of the right winker being covered by the winker cover in the rear view; wherein
the winker cover is disposed under the taillight in the rear view,
the left winker translucent cover includes a left winker light-emitting surface which is not covered by the winker cover;
the right winker translucent cover includes a right winker light-emitting surface which is not covered by the winker cover;
at least a portion of an upper edge of each of the left side cover and the right side cover extends rearward in a side view;
at least a portion of a lower edge of each of the left side cover and the right side cover extends rearward and upward in the side view and a rear end, at which the upper edge and the lower edge of each of the left side cover and the right side cover intersect, overlaps with the taillight in the side view;
the taillight includes a translucent cover;
the translucent cover includes an upper light-emitting surface which is not covered by the rear cover and extends upward and forward from a rear edge of the translucent cover, and a lower light-emitting surface which is not covered by the rear cover and extends upward and forward from the rear edge of the translucent cover;
a rear end of the translucent cover is disposed further rearward than the rear end of each of the left side cover and the right side cover;
the left winker and the right winker are disposed under the taillight in the rear view, and an entire portion of the left winker light-emitting surface and the right winker light-emitting surface is disposed between a left end and a right end of the translucent cover of the taillight in the rear view.

2. The scooter-type vehicle according to claim 1, wherein
an upper edge of the winker cover extends rearward along the lower edge of each of the left side cover and the lower edge of the right side cover in the side view, and a lower edge of the winker cover extends rearward and upward from the front side in the side view.

3. The scooter-type vehicle according to claim 1 or 2, wherein
the entire portion of the left winker light-emitting surface and the right winker light-emitting surface is disposed between the left end and the right end of the light-emitting surface of the taillight in the rear view.

4. The scooter-type vehicle according to any one of claims 1 to 3, wherein
the winker cover is formed so that the left winker light-emitting surface and the right winker light-emitting surface are exposed from the winker cover in the side view.

5. The scooter-type vehicle according to any one of claims 1 to 3, wherein
the left winker light-emitting surface and the right winker light-emitting surface are formed so as not to be exposed from the winker cover in the side view.

6. The scooter-type vehicle according to any one of claims 1 to 5, wherein
the upper light-emitting surface of the taillight is formed in a substantially U-shape in a plan view.

7. The scooter-type vehicle according to any one of claims 1 to 6, wherein,
a width of the upper light-emitting surface of the taillight in the left-right direction reduces toward the rear side in a plan view.

8. The scooter-type vehicle according to any one of claims 1 to 7, wherein,
a rear end of the left winker light-emitting surface and a rear end of the right winker light-emitting surface are disposed further forward than the rear end of the light-emitting surface of the taillight in the side view.

9. The scooter-type vehicle according to any one of claims 1 to 8, wherein
a rear end of the left winker light-emitting surface and a rear end of the right winker light-emitting surface are disposed further forward than the front end of the lower light-emitting surface of the taillight in the side view.

10. The scooter-type vehicle according to any one of claims 1 to 9, wherein,
the left winker light-emitting surface extends downward and forward from a rear end thereof in the side view, and
the right winker light-emitting surface extends downward and forward from a rear end thereof in the side view.

11. The scooter-type vehicle according to claim 1 or 10, wherein
the winker cover is disposed between the left side cover and the right side cover in the rear view.
